# FASCICULE DE BREVET EUROPEEN

(11) **EP 0 543 682 B1**
(45) Date de publication et mention de la délivrance du brevet: **30.07.1997**
(21) Numéro de dépôt: 92401817.9
(22) Date de dépôt: 26.06.1992
(51) Int. Cl.: H01H 33/12, H01H 33/02

(54) **Disjoncteur auto-sectionneur à hexafluorure de soufre et applications aux cellules et aux postes et sous-stations préfabriqués**
SFG-Lasttrennschalter und Verwendung in Zellen und Posten und vorfabrizierten Unterstationen
SFG load break switch and application to cells and posts and prefab substations

(30) Priorité: 20.11.1991 FR 9114313
(43) Date de publication de la demande: 26.05.1993
(73) Titulaire: GEC ALSTHOM SA, 75116 Paris (FR)
(72) Inventeur: Rozier, Paul, F-71530 Chalon sur Saone (FR)
(74) Mandataire: Fournier, Michel

(56) Documents cités:
- EP-A- 0 028 047
- EP-A- 0 094 858
- EP-A- 0 405 253
- CH-A- 668 334
- FR-A- 1 533 266
- US-A- 3 641 295

## Description

La présente invention est relative à un disjoncteur auto-sectionneur à hexafluorure de soufre (SF6) en moyenne et haute tension tel que décrit dans le préambule de la revendication 1, et à diverses applications de cet appareil, en particulier aux cellules et aux postes et sous-stations préfabriqués. L'invention s'applique aux disjoncteurs à SF6 de tout type de technologie (à autosoufflage, à soufflage thermique, à arc rotatif ou à une combinaison de ces différents types). L'invention s'applique aux appareils de toutes tensions comprises entre 3 et 72 kilovolts.

On appelle disjoncteur auto-sectionneur un appareil électrique ayant un pouvoir de coupure comme un disjoncteur et qui, lorsqu'il est en position isolée, peut présenter entre ses bornes une tenue diélectrique entre entrée et sortie égale ou supérieure à celle qui est exigée des sectionneurs.

Un tel appareil peut donc remplacer trois appareils, à savoir un disjoncteur encadré par deux sectionneurs, ce qui est particulièrement avantageux pour l'exploitant, tant en raison de l'économie réalisée en investissement (moindre coût, plus faible encombrement au sol) que par les économies d'entretien au cours de l'exploitation.

Le principe d'un tel appareil a été décrit dans le brevet français n° 1 533 266, qui forme la base du préambule de la revendication 1, mais aucune mode de réalisation industrielle n'a été décrit en détail.

Les progrès réalisés dans le domaine de la coupure au moyen de l'hexafluorure de soufre (SF6), autorisent désormais d'envisager la réalisation industrielle d'un tel appareil permettant:
- la réduction de l'encombrement de l'appareil,
- la réduction de l'énergie nécessaire dans le boîtier de commande,
- la réduction de son prix de revient.

Un but de la présente invention est donc de définir un disjoncteur auto-sectionneur à hexafluorure de soufre du type précité de construction compacte et pouvant être facilement utilisé dans la réalisation d'une sous-station préfabriquée.

Un autre but de l'invention est de définir une sous-station de prix de revient inférieur à celui des sous-stations de type connu.

Un autre but de l'invention est de réaliser un disjoncteur auto-sectionneur permettant une commande à distance aussi bien de la fonction sectionneur que de la fonction disjoncteur.

Un autre but de l'invention est de réaliser un disjoncteur auto-sectionneur comportant une protection sans source d'énergie auxiliaire.

L'invention a pour objet un disjoncteur auto-sectionneur à hexafluorure de soufre multipolaire dans lequel chaque pôle comprend une enveloppe isolante remplie d'hexafluorure de soufre et munie d'un premier et d'un second flasques métalliques d'extrémité, l'enveloppe comprenant à son intérieur un jeu de contacts fixes reliés à une première mâchoire de contact extérieure à l'enveloppe et reliée mécaniquement et électriquement au premier flasque, un jeu de contacts mobiles reliés électriquement à une seconde mâchoire de contact extérieure à l'enveloppe et solidaire du second flasque, et reliés mécaniquement à un mécanisme de manoeuvre, caractérisé en ce que, pour chaque pôle, les contacts mobiles sont électriquement reliés par contacts glissants à un tube métallique fixe s'étendant à l'intérieur de l'enveloppe, coaxialement à celle-ci, et débouchant dans un carter étanche, ladite seconde machoire étant solidaire du carter, lesdits contacts mobiles étant reliés à une tringle de manoeuvre disposée à l'intérieur dudit tube et articulée, dans le carter, à une bielle elle-même articulée par une première extrémité à un axe fixe traversant le carter de manière étanche et par une seconde extrémité à une première extrémité d'une tige isolante dont l'autre extrémité est articulée par une bielle à un arbre de commande commun aux divers pôles du disjoncteur auto-sectionneur, l'arbre de commande étant disposé parallèlement à un profilé métallique au potentiel de la terre auquel sont fixés les pôles du disjoncteur auto-sectionneur, la fixation étant faite sensiblement au milieu de chaque enveloppe, les diverses enveloppes étant disposées parallèlement entre elles et perpendiculairement audit profilé, les extrémités dudit profilé étant montées pivotantes sur deux faces opposées d'un tiroir sensiblement parallélépipédique le profilé étant monté, dans le tiroir, mobile en rotation autour de sa propre direction, le tiroir ayant des dimensions suffisantes pour contenir l'ensemble des pôles, la fonction sectionnement du disjoncteur auto-sectionneur étant assurée par une rotation de 90 degrés du profilé par rapport au tiroir l'arbre de commande étant associé à un boîtier de commande solidaire dudit profilé et contenant un mécanisme de stockage d'énergie de manoeuvre et des moyens de mise en rotation dudit arbre de commande pour assurer simultanément dans chaque pôle la fonction disjoncteur, le disjoncteur étant placé dans un caisson métallique dans lequel peut coulisser le tiroir, le caisson contenant des éléments isolants de maintien des jeux de barres et des départs de câbles avec lequels coopère le disjoncteur auto-sectionneur.

Avantageusement, l'enveloppe est entourée d'un tore magnétique bobiné constituant un transformateur de courant, le tore étant disposé au-dessus de ladite équerre.

L'invention a également pour objet une sous-station préfabriquée comprenant au moins un disjoncteur auto-sectionneur du type précité.

De préférence, la sous-station est composée de modules préfabriqués juxtaposés comportant chacun un compartiment pour les jeux de barres, des glissières pour recevoir un tiroir contenant les pôles du disjoncteur auto-sectionneur et un compartiment jeu de câbles ou arrivées aériennes.

L'invention sera bien comprise par la description ci-après d'un mode de réalisation d'un disjoncteur auto-sectionneur selon l'invention, ainsi que plusieurs exemples de sous-stations comportant un tel disjoncteur auto-sectionneur, en référence au dessin annexé dans lequel:
- la figure 1 est une vue en perspective d'un disjoncteur auto-sectionneur à SF6 selon un mode de réalisation de l'invention, dans lequel le tiroir n'a pas été représenté,
- la figure 2 est une vue en élévation en coupe axiale d'un pôle du disjoncteur auto-sectionneur à SF6 selon un mode de réalisation de l'invention,
- la figure 3 est une vue agrandie en élévation en coupe axiale de la partie chambre de coupure du pôle de la figure 2,
- la figure 4 est une vue en élévation partiellement en coupe d'un mode de réalisation du disjoncteur auto-sectionneur à SF6 selon l'invention, placé dans un caisson avec ses connexions à un jeu de barres et à un départ de câbles, représenté disjoncteur et sectionneur fermés,
- la figure 5 est une vue en élévation partiellement en coupe du même disjoncteur auto-sectionneur représenté disjoncteur ouvert et sectionnement effectué,
- la figure 6 montre en perspective une cellule comprenant un disjoncteur auto-sectionneur selon un mode de réalisation de l'invention, représenté tiroir ouvert,
- la figure 7 illustre le mécanisme pour la manoeuvre de la fonction sectionnement du disjoncteur auto-sectionneur selon un mode de réalisation de l'invention,
- la figure 8 illustre le mécanisme de manoeuvre de la fonction coupure du disjoncteur auto-sectionneur de l'invention,
- la figure 8A est une vue de côté du mécanisme de manoeuvre du tiroir de protection coulissant,
- la figure 8B est une vue de dessus du même mécanisme,
- la figure 8C est une vue en perspective du mécanisme de manoeuvre en translation des pôles du disjoncteur auto-sectionneur de l'invention
- la figure 8D est une vue en perspective d'une variante de réalisation de volets pour isoler les deux parties d'une cellule,
- la figure 8E est une vue de côté des volets de la figure 8D
- la figure 9 est une vue en élévation de face en coupe d'une sous-station comprenant quatre arrivées ou départs et une distribution sur un jeu de barres,
- la figure 10 est une vue en élévation de côté en coupe de la même sous-station,
- la figure 11 est une vue en élévation en coupe d'une sous-station comprenant des jeux de barres et des départs en câbles souterrains,
- la figure 12 est une vue en élévation d'une autre sous-station avec départs aériens et par câbles
- la figure 13 est un schéma d'un poste en H de type connu,
- la figure 14 est un schéma montrant un poste en H réalisé au moyen de disjoncteurs auto-sectionneurs selon l'invention
- la figure 15 représente schématiquement une cellule agencée pour permettre la mise à la terre intégrale des câbles,
- la figure 16 est un schéma d'un accessoire utilisé pour la mise à la terre intégrale dans la cellule de la figure 15,
- la figure 17 est une vue en coupe de face d'un poste équipé de disjoncteurs auto-sectionneurs selon l'invention,
- la figure 18 est une vue en coupe de côté du même poste.

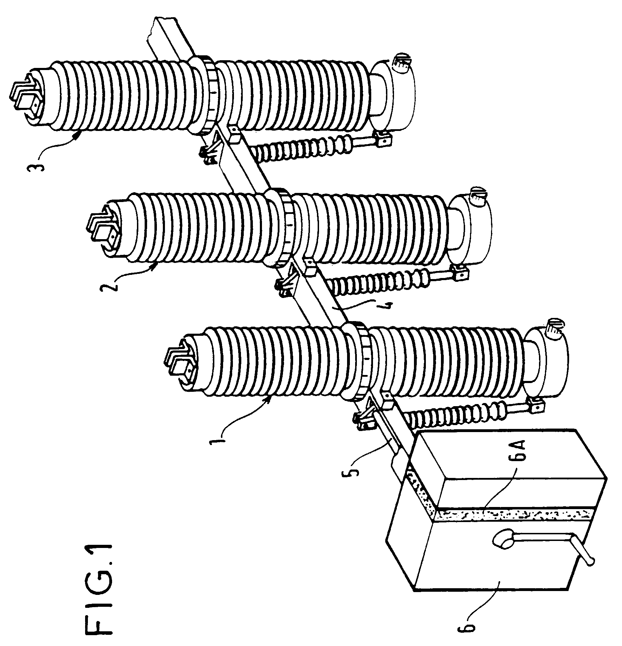

Dans la figure 1, on a désigné par les références 1, 2 et 3 les trois pôles d'un disjoncteur auto-sectionneur triphasé à SF6 selon un mode de réalisation de l'invention.

Comme on peut le voir dans le dessin, les trois pôles sont portés par un profilé métallique 4, de préférence en équerre, auquel est fixé un arbre de commande 5 assurant la fonction disjoncteur de l'appareil. L'arbre de commande est relié à un mécanisme de manoeuvre contenu dans un boîtier de commande 6 qui a la particularité d'être solidaire du profilé métallique 4. Comme on le verra en détail plus loin, la fonction sectionneur de l'appareil est assurée par une rotation de 90 degrés du profilé 4 autour de son arête, le boîtier de commande étant entraîné dans cette rotation, ce qui a l'avantage de fournir une indication visuelle de la position ouverte ou fermée du sectionnement. Un profilé en plastique, en équerre, non représenté, peut être fixé au profilé métallique, par exemple par clipsage, de manière à constituer une poutre creuse protégeant l'arbre 5 de la poussière et de la pollution.

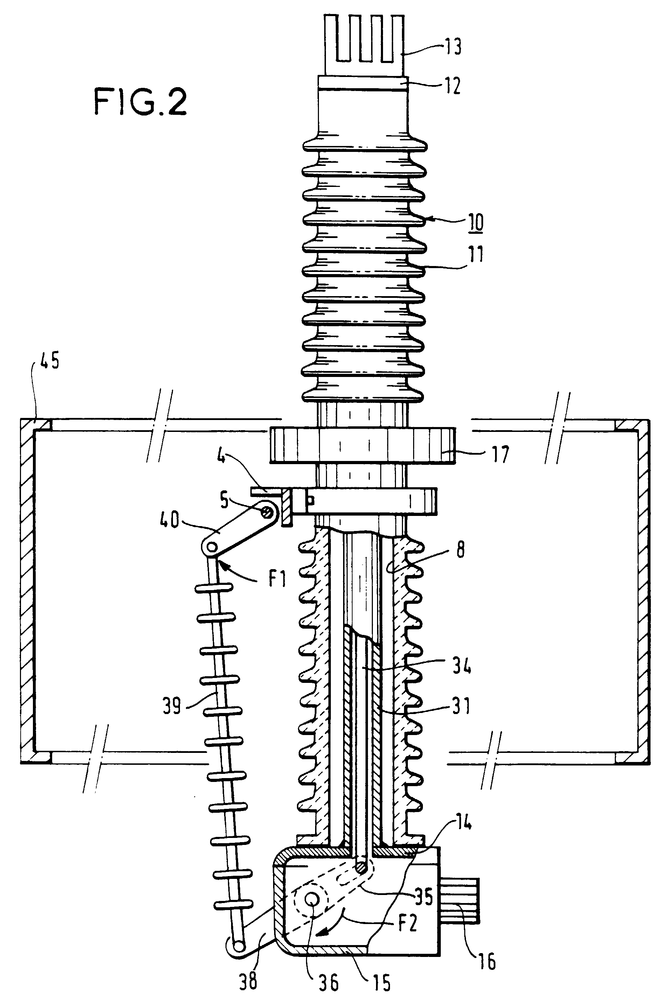

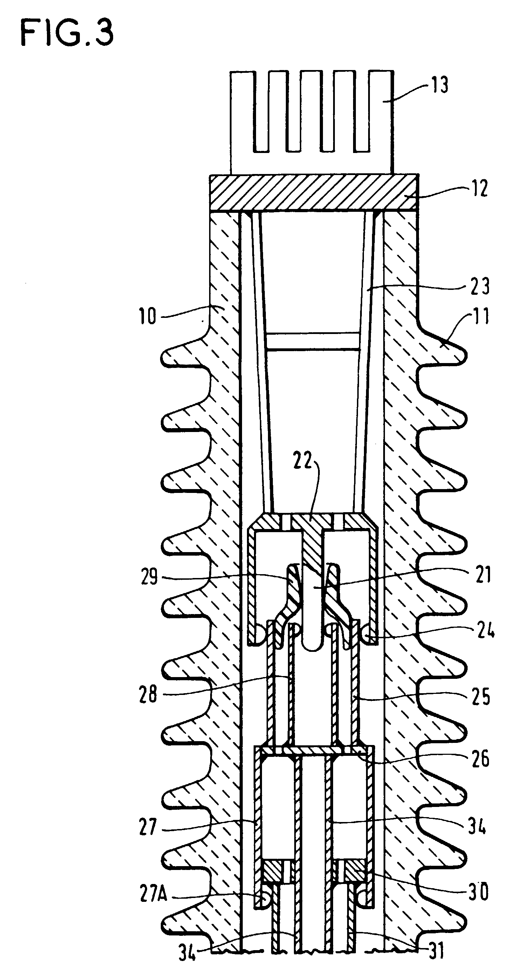

On voit, à l'examen des figures 2 et 3, qu'un pôle du disjoncteur auto-sectionneur de l'invention comprend une enveloppe 10 en matériau isolant tel que la céramique, la résine époxy, ou tout autre matériau composite compatible avec l'emploi de l'héxafluorure de soufre SF6. Cette enveloppe est munie d'ailettes 11, soit venues de moulage (époxy, silicone, élastomère), soit rapportées. L'enveloppe est fermée à une première extrémité par un premier flasque métallique 12 portant une première mâchoire métallique 13. L'enveloppe est fermée à une seconde extrémité par un second flasque métallique 14, auquel est fixé un carter étanche 15 portant une seconde mâchoire 16.

La partie centrale de l'enveloppe est dépourvue d'ailettes pour permettre d'une part la fixation du pôle au profilé métallique 4, d'autre part pour permettre la présence d'un tore magnétique bobiné 17 constituant un transformateur de courant alimentant un relais de protection pouvant ainsi fonctionner sans source électrique auxiliaire. Lorsque les ailettes de l'enveloppe sont du type ailettes rapportées, le tore est fermé et glissé autour de l'enveloppe cylindrique avant montage des ailettes; dans le cas où les ailettes sont venues de moulage ou de façonnage avec l'enveloppe, un tore de type ouvert est utilisé.

Le tore est calé contre la cornière et immobilisé.

L'intérieur de l'enveloppe est rempli de gaz à bonnes propriétés diélectriques et l'on choisit de préférence l'hexafluorure de soufre de formule SF6, pur ou mélangé avec de l'azote, sous une pression de quelques hectopascals.

Une moitié de l'enveloppe constitue la chambre de coupure de l'appareil. On a représenté dans la figure 3 une chambre de coupure à soufflage de gaz, mais il est bien entendu que l'invention s'applique à tous les types de chambre de coupure et notamment les chambres de coupure à auto-soufflage d'arc, les chambres de coupures à soufflage par production d'énergie thermique et les chambres de coupure à arc tournant.

Dans la figure 3, la référence 21 désigne un contact d'arc fixe solidaire d'une couronne 22 fixée au flasque 12 par des bras métalliques 23; la couronne 22 porte également des doigts de contact 24 constituant le contact permanent fixe de l'appareil.

Les doigts 24 coopèrent avec un tube métallique 25 constituant le contact permanent mobile de l'appareil; ce tube est fixé à un plateau 26 portant un cylindre de soufflage 27; le plateau métallique 26 porte également une couronne de doigts de contact 28 constituant le contact d'arc mobile de l'appareil et coopérant avec le contact d'arc fixe 21.

Le cylindre de soufflage 27 contient un piston de soufflage fixe 30, fixé à une première extrémité d'un tube métallique 31 qui s'étend tout le long de l'enveloppe et dont la seconde extrémité est soudée au second flasque 14.

Le tube 25 porte une buse de soufflage 29 en matériau isolant.

Au plateau 26 est fixé un tube métallique 34, constituant la tringle de manoeuvre de la partie disjoncteur de l'appareil; ce tube 34 est disposé à l'intérieur du tube 31 et coaxialement à celui-ci; il traverse le flasque 14 et pénètre à l'intérieur du carter 15 où il est articulé à une première bielle 35 pivotant autour d'un axe fixe 36 traversant le carter de manière étanche et débouchant à l'extérieur de celui-ci.

Le tube 27 est muni de contacts glissants 27A assurant le passage du courant entre le tube 27 et le tube 31.

Une seconde bielle 38 est articulé sur l'axe 36, à l'extérieur du carter 15. Cette bielle est elle-même articulée à une première extrémité d'une tringle isolante 39 dont l'autre extrémité est articulée à un levier 40 calé sur l'arbre de commande 5 de l'appareil.

Le fonctionnement de la partie disjoncteur de l'appareil est le suivant.

En position fermée du disjoncteur, chacun des pôles est dans la configuration représentée dans la figure 3. Le courant traverse successivement la mâchoire 13, le premier flasque 12, les bras 23, les contacts 24, le tube 25, le cylindre 27, les doigts 27A, le tube 31, le second flasque 14, le carter 15 et la seconde mâchoire 16.

Pour ouvrir le disjoncteur, une rotation dans le sens de la flèche F1 est communiquée à l'arbre 5. Le levier 40 pivote, entraîne la tringle isolante 39 qui fait pivoter l'axe 36 dans le sens de la flèche F2; la rotation de la bielle 35 provoque le déplacement en translation vers le bas de la figure du tube de manoeuvre 34. Les contacts mobiles sont entraînés et se séparent des contacts fixes. L'arc est soufflé par le gaz comprimé dans le cylindre 34 et qui s'échappe à travers la buse de soufflage 32.

On notera que les plateaux 22 et 26, le piston 30 et le flasque 14, portent des trous ou ouvertures permettant une bonne circulation du gaz et sa rapide régénération après chaque manoeuvre d'ouverture.

Un écran métallique 8 disposé à l'intérieur de l'enveloppe 10 au droit du tore 17 et du profilé 4 assure une bonne répartition du potentiel.

Cette mesure contribue à la tenue diélectrique qui est assurée en outre par l'épaisseur de la couche de gaz SF6 sous pression à ce niveau, par une répartition capacitive du gradient de potentiel à l'intérieur de l'enveloppe et par une métallisation extérieure de l'enveloppe. Cette répartition de potentiel est avantageusement établie et calculée au moyen de modèles mathématiques bien connus.

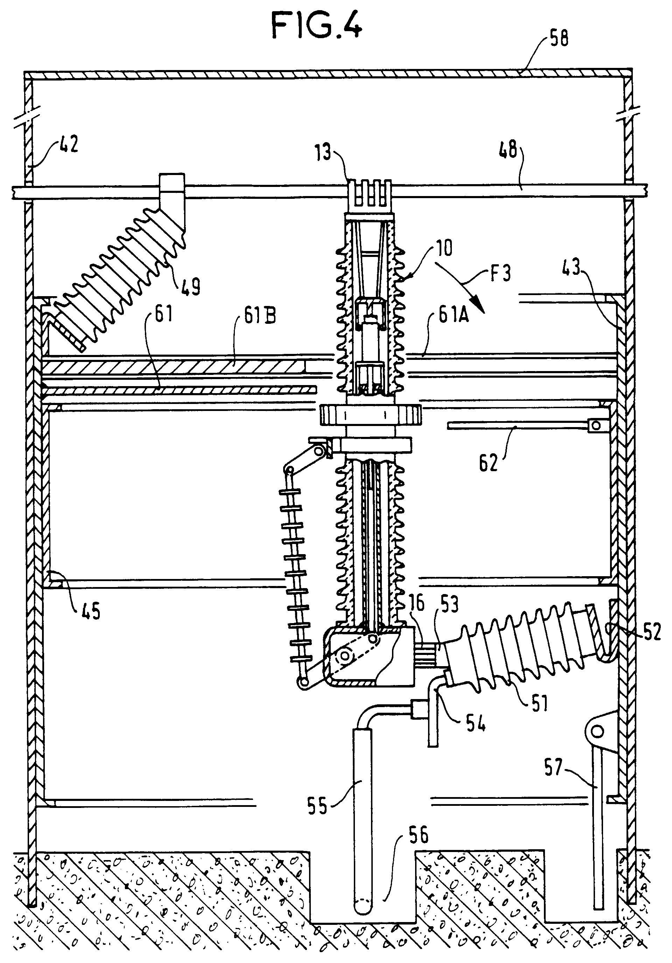

Selon une caractéristique très importante de l'invention, les extrémités du profilé 4 sont montées pivotantes sur deux faces opposées d'un tiroir. On se référera à la figure 4 qui montre le disjoncteur auto-sectionneur de l'invention monté dans une cellule.

Seul un des pôles de l'appareil est visible dans la figure puisqu'il s'agit d'une représentation en bout, mais il ne faut pas oublier que l'appareil triphasé comprend deux autres pôles solidaires du profilé métallique 4.

Dans la figure 4, la cellule comprend une structure ou charpente métallique 42 à laquelle est fixé un caisson 43. Dans le caisson peut coulisser, perpendiculairement au plan de la figure, un tiroir 45 sur lequel le profilé 4 support de pôles est monté pivotant entre deux faces opposées parallèles au plan de la figure. L'appareil est représenté disjoncteur fermé et sectionneur fermé. Dans ce qui suit, on décrira les éléments relatifs à un seul pôle, mais il faut bien comprendre qu'on retrouve la plupart des éléments décrits pour chacun des trois pôles d'un disjoncteur auto-sectionneur triphasé. Le pôle 1 est relié électriquement par sa mâchoire 13 à une barre 48 d'un jeu de barres triphasé. La barre 48 est maintenue en place par un isolateur 49 maintenu en position fixe par une console 50 fixée au caisson 43. L'autre mâchoire 16 de l'appareil est reliée à un isolateur 51 fixé au caisson 43 par une console 52; dans l'exemple de la figure 4, l'isolateur choisi est un transformateur de courant dans lequel on mesure le courant traversant le disjoncteur auto-sectionneur entre une borne 53 et une borne 54. En variante, l'appareil 51 pourrait être un parafoudre ou un simple isolateur sans autre fonction électrique. La borne 54 constitue un départ d'un câble 55 qui quitte la cellule par une tranchée 56. Un sectionneur de terre 57 complète la cellule qui est munie d'un toit 58.

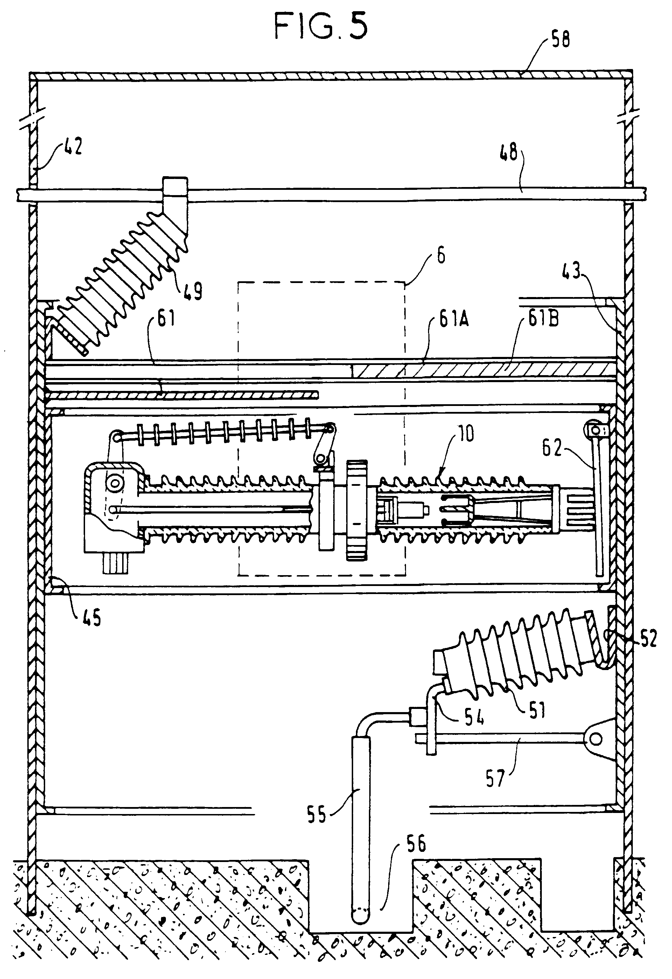

Le sectionnement du disjoncteur auto-sectionneur de l'invention est effectué de la manière suivante:
- le disjoncteur est déclenché par action sur l'arbre de commande 5 comme il a été expliqué plus haut.
- l'ensemble de l'appareil est alors basculé, manuellement ou de manière motorisée, dans le sens de la flèche F3. On obtient alors la configuration de la figure 5, l'ensemble des pôles du disjoncteur auto-sectionneur trouvant place dans le tiroir 45. On observe que le boîtier de commande 6 a pivoté en même temps que le profilé 4. Cette disposition permet un sectionnement visible, ce qui accroît la sécurité du personnel d'exploitation. Une signalisation 6A, portée par le boîtier de commande 6, par exemple une bande de peinture, permet d'accroître encore cette sécurité. Un dispositif connu mais non représenté permet d'éviter l'extraction totale du tiroir, ce qui interdit l'accès aux pièces du compartiment barres de la cellule. Des moyens décrits plus loin empêchent totalement l'accès aux barres lorsque le tiroir est en position ouverte.

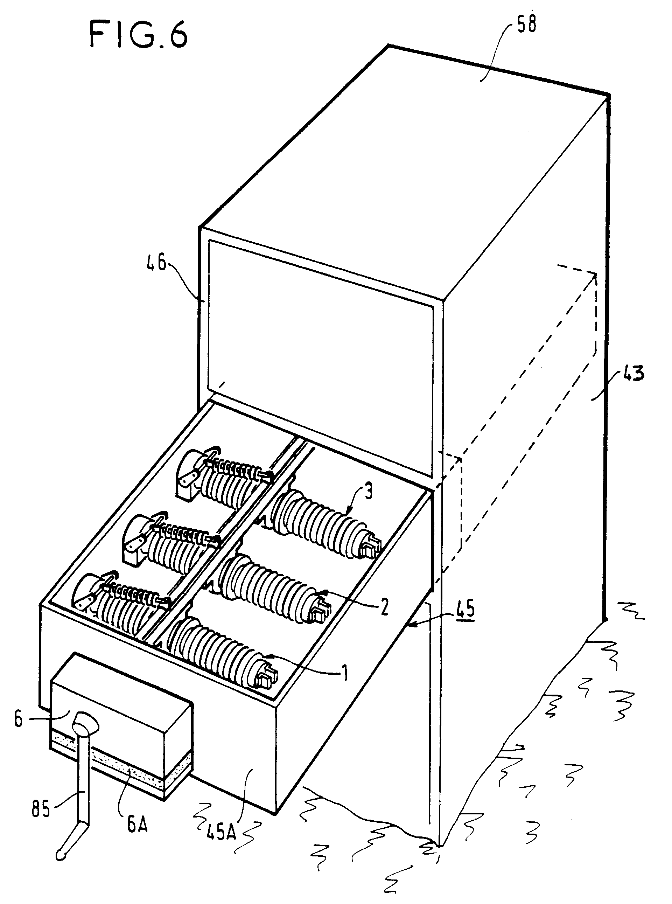

La figure 6 illustre l'extraction du tiroir, permettant l'examen des pôles ou leur remplacement. On observera que la disposition des pôles n'autorise la refermeture du tiroir qu'en position sectionneur ouvert. On note enfin que lorsque le tiroir est ouvert, les pôles du disjoncteur auto-sectionneur peuvent être replacés en position verticale, par rotation du profilé 4, par exemple pour réaliser des essais d'enclenchement ou de déclenchement ou pour démonter un pôle.

Le caisson comprend un premier volet 61, fixe, qui, en service normal, sépare la partie gauche du compartiment jeux de barres de la partie gauche du compartiment câbles.

Le caisson porte en outre deux glissières 61A dans lesquelles peut coulisser un second volet, mobile, 61B; en position de fonctionnement normal du disjoncteur auto-sectionneur, le volet 61B se trouve au-dessus du volet 61 (figure 4); lorsque le disjoncteur auto-sectionneur est en position sectionnée, le volet 61B vient occuper une position à la droite de la figure, de sorte que tout accès au compartiment barres à partir de la face avant de la cellule est interdit.

Le tiroir est équipé d'un obturateur automatique pivotant 62 qui est rappelé en position par un ressort; ce volet sépare la partie droite du compartiment barres du compartiment câbles lorsque le disjoncteur auto-sectionneur est en service normal; lors d'une manoeuvre de sectionnement, il assure la mise au potentiel de la terre de l'appareil en venant et restant en contact avec la mâchoire 13 (figure 5).

On observera que le profilé métallique 4, relié au boîtier de commande 6, est au potentiel de la terre; comme les pôles du disjoncteur auto-sectionneur sont tous montés sur ce profilé, le risque d'amorçage entre phases est pratiquement inexistant.

Les tores 17 dont sont munis les pôles permettent de détecter un courant anormal de surcharge ou de court-circuit dans les pôles, et de commander l'ouverture du disjoncteur; le relais à maximum de courant à action directe, et pour lequel il n'est pas nécessaire de disposer d'une source d'énergie auxiliaire, peut être placé dans le boîtier de commande 6. En cas de claquage de la l'enveloppe du pôle au droit du profilé métallique, le capteur de courant détecte le défaut à la terre et provoque le déclenchement.

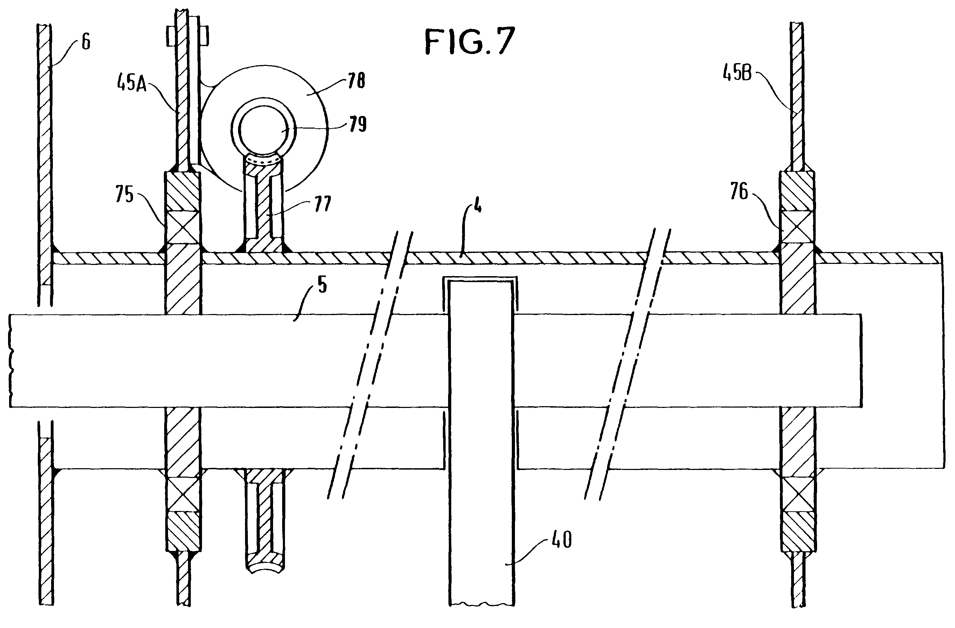

La figure 7 illustre la motorisation de la fonction sectionnement du disjoncteur auto-sectionneur de l'invention.

Dans la figure, on distingue le profilé métallique 4 et l'arbre de commande 5 des pôles et l'une des bielles 40; le pôle correspondant n'a pas été représenté, par souci de clarté du dessin.

Le profilé 4 est maintenu par deux paliers à billes 75 et 76 solidaires respectivement des parois 45A et 45B du tiroir 45. Le boîtier de commande 6 est solidarisé à la cornière 4, par exemple par soudage. Un moteur 78, fixé à la paroi 45A du tiroir, entraîne par une vis hélicoïdale 79, avec réduction de vitesse, le pignon 77 solidaire du profilé, ce qui provoque la rotation du profilé 4 et du boîtier 6, indépendamment du mouvement de rotation de l'arbre de commande 5. La motorisation de la fonction sectionnement qui vient d'être décrite montre que l'appareil peut être télécommandé et qu'il peut donc équiper les sous-stations pour lesquelles il n'est pas prévu de personnel de manoeuvre ou de surveillance.

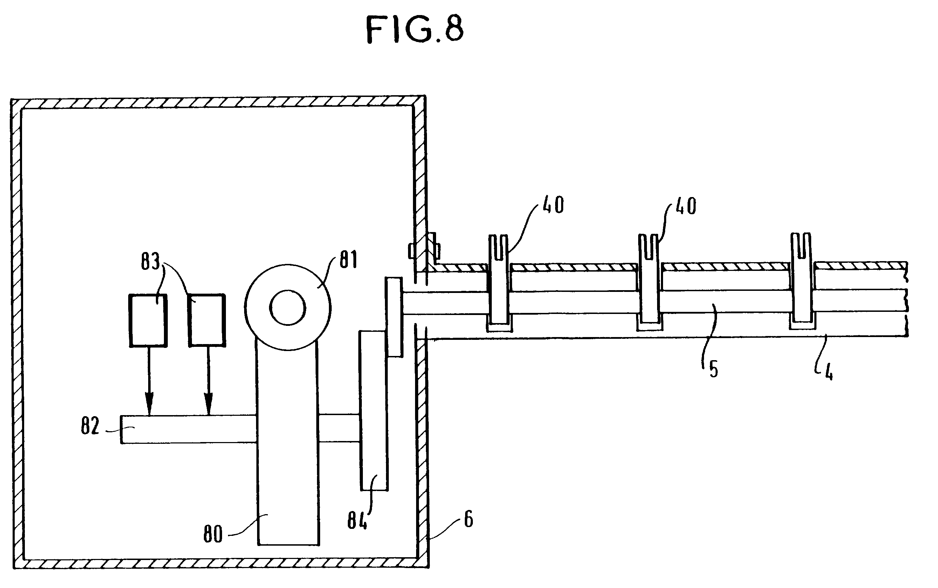

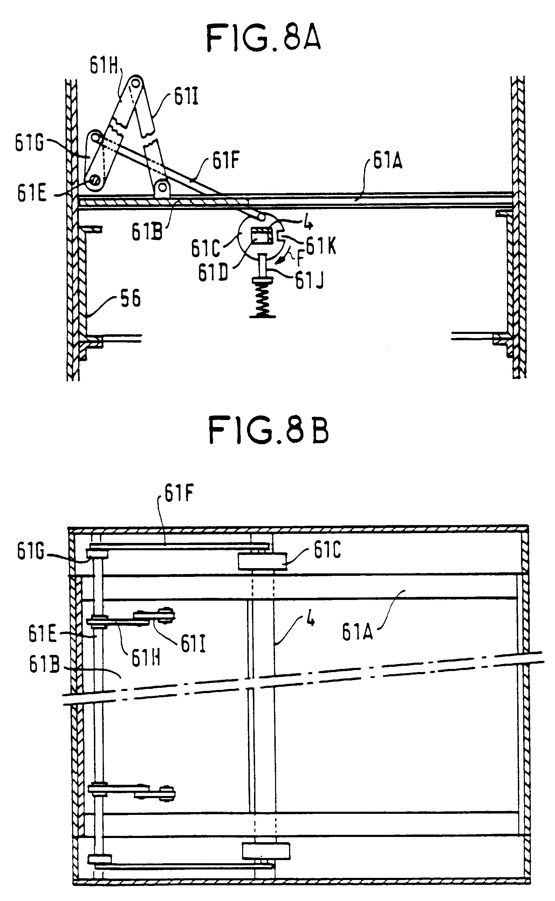

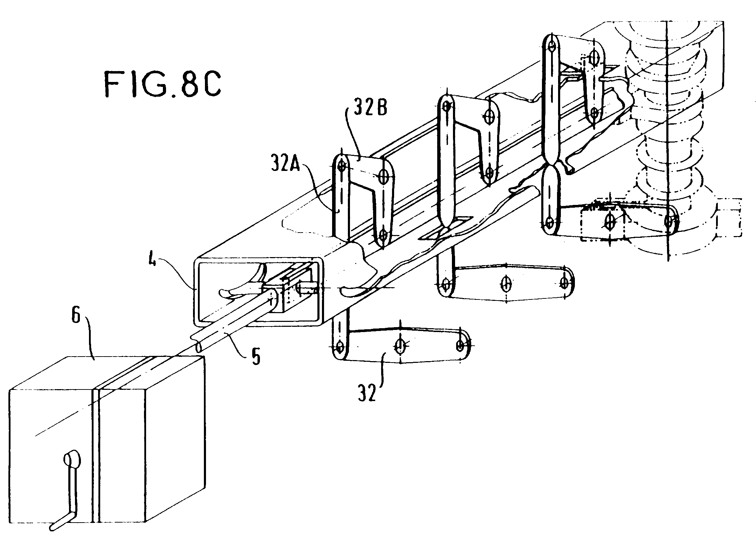

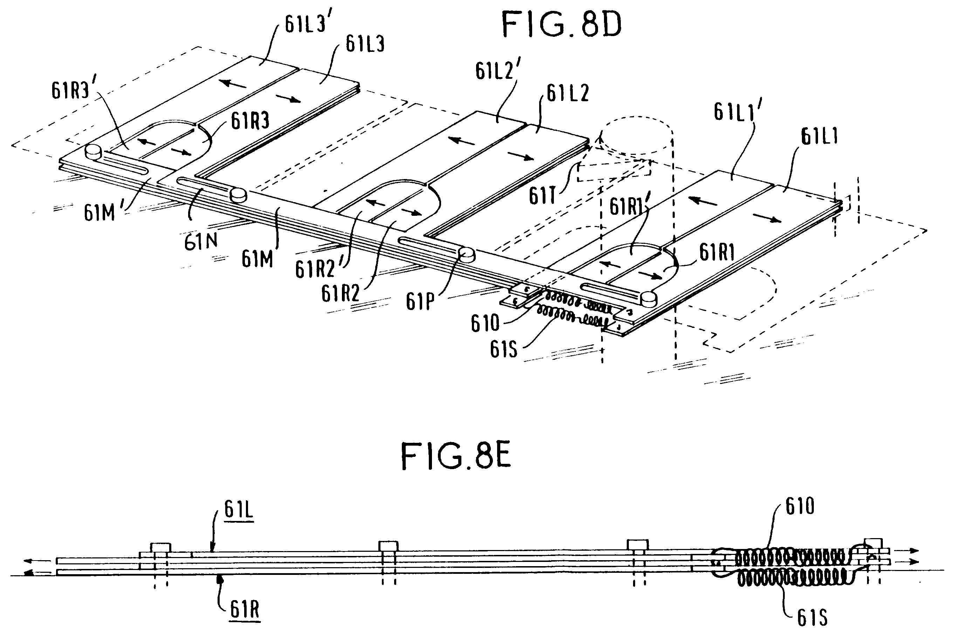

Le boîtier 6 contient, outre le relais à maximum de courant précité, tout le mécanisme de mise en rotation de l'arbre de commande 5, permettant d'effectuer des cycles d'ouverture et de fermeture de la partie disjoncteur du disjoncteur auto-sectionneur de l'invention. La figure 8 est un schéma de principe de ce mécanisme dont l'intérêt est qu'il est directement relié à l'arbre de commande 5 du disjoncteur auto-sectionneur. Il suffit de donner le principe de ce mécanisme; sa mise en oeuvre est à la portée de l'homme du métier qui pourra utilement se référer aux Techniques de l'Ingénieur, Appareillage électrique d'interruption à haute tension, par Eugène MAURY, D 657-4, page 49.

Dans la figure 8, on reconnaît l'arbre 5 disposé le long du profilé 4 solidarisée au boîtier de commande 6.

Le mécanisme comprend un tambour 80 muni d'un ressort et qui constitue le réservoir d'énergie de manoeuvre. Un moto-réducteur 81 permet d'entraîner le tambour pour réarmer le ressort. Le tambour entraîne en rotation un arbre 82 tournant toujours dans le même sens sous l'action de la détente du ressort; cet arbre est associé à des dispositifs d'accrochage 83 à commande électrique ou manuelle, permettant de réaliser les cycles habituels d'ouverture et de fermeture (par exemple un cycle OUVERTURE, 0,1 seconde FERMETURE, OUVERTURE). Un dispositif excentrique 84 permet de transformer le mouvement à sens unique de l'arbre 82 en un mouvement circulaire alternatif communiqué à l'arbre de commande 5 du disjoncteur auto-sectionneur. Le mécanisme comporte, comme il est bien connu, un organe de réarmement manuel comportant une manivelle 85 visible dans les figures 1 et 6.

Les figures 8A et 8 B illustrent un mode de réalisation, donné à titre d'exemple, d'un mécanisme de manoeuvre du volet 61B.

Le caisson 43 porte, sur sa face arrière, un disque mobile 61C muni d'un trou central 61D de forme convenable pour recevoir le profilé 4 qui déborde du tiroir au-delà de la face 45B (voir figure 7) et permettre la rotation du disque lorsque le profilé 4 support des pôles tourne sur lui-même lors d'une opération de sectionnement. Lorsque le profilé est une équerre, comme indiqué précédemment, le trou est avantageusement de forme carrée ou rectangulaire.

Le volet est entraîné en translation par la rotation du disque au moyen de deux jeux d'embiellages coopérant avec un arbre 61E parallèle au plan du volet et parallèle au profilé 4. L'arbre est fixé au caisson 43 au moyen de paliers non représentés. Il est entraîné en rotation par une bielle 61F articulée d'une part sur le disque 61C et d'autre part à une manivelle 61G calée sur l'arbre 61E. Le mouvement de rotation de l'arbre est converti en un mouvement de translation communiqué au volet au moyen de deux jeux d'embiellages. Seul l'un des jeux d'embiellages, celui du fond du tiroir, est décrit en détail, l'autre jeu, à l'avant du tiroir, étant tout à fait identique. Le premier jeu d'embiellages comprend une bielle 61H calée sur l'arbre 61E et articulée à une manivelle 61I articulée au volet. Lors d'une manoeuvre de sectionnement, le profilé 4, engagé dans le trou du disque 61C, est entraîné en rotation dans le sens de la flèche F; la rotation du disque entraîne la rotation de l'arbre 61E et l'ensemble bielle-manivelle 61H-61I provoque la translation du volet 61B qui vient obstruer l'accès de la partie droite du compartiment barres. Après la manoeuvre de sectionnement, si on extrait le tiroir, un loquet de verrouillage 61J vient s'engager dans une échancrure 61K du disque 61C, immobilisant le volet dans sa position. Le loquet, muni d'un ressort, ne libère la rotation du disque que lorsque le tiroir est remis en place.

Dans les figures précédentes, on à vu que la manoeuvre des ampoules à vide se faisait grâce à la rotation de l'arbre de commande 5. La figure 8C illustre une variante de réalisation dans laquelle l'arbre 5 est animé d'un mouvement de translation appelé aussi tire-pousse. Ce mouvement est communiqué au levier 32 de manière connue, grâce par exemple à un levier 32A et à une bielle coudée 32B.

On décrit maintenant une variante de réalisation des volets interdisant l'accès au compartiment barres.

On a représenté, dans les figures 8D et 8E, deux volets parallèles superposés et désignés respectivement et globalement par les références 61L et 61R; le volet 61L comprend une première partie comportant trois portions rectangulaires 61L1, 61L2 et 61L3 munies chacun d'une échancrure et réunies par une portion allongée 61M munie de fentes oblongues 61N; le volet 61L comprend une seconde partie comportant trois portions rectangulaires 61L1', 61L2' et 61L3' munies chacune d'une échancrure et réunies par une portion allongée 61M' munie d'ergots 61P traversant la portion 61M' et s'engageant dans les fentes 61N; les parties 61L et 61M sont rappelées l'une vers l'autre par des ressorts tels que 610; les échancrures définissent des ouvertures épousant la périphérie des pôles lorsque ceux-ci sont en position enclenchée, ce qui sépare la cellule en deux parties.

Le volet 61R comprend une première partie comportant trois portions rectangulaires 61R1, 61R2 et 61R3 réunies par une portion allongée non référencée et munie de fentes oblongues, et une seconde partie comprenant trois portions rectangulaires 61R1' 61R2' et 61R3'réunies par une portion allongée, non référencée et munie de fentes dans lesquelles s'engagent les ergots 61P; les deux parties sont rappelées l'une vers l'autre par des ressorts tels que 61S;

Lorsque le disjoncteur est en position déclenchée et sectionnée, le volet 61R interdit l'accès au compartiment barres de la cellule.

Les volets 61L et 61R sont manoeuvrés soit par les pôles eux-mêmes qui portent un éperon tel que celui référencé 61T, soit par un mécanisme du type de celui décrit précédemment en référence aux figures 8A et 8B.

Le disjoncteur auto-sectionneur de l'invention peut être utilisé pour l'élaboration de sous-stations économiques, occupant au sol une place réduite et comportant tous les éléments nécessaires à l'exploitation.

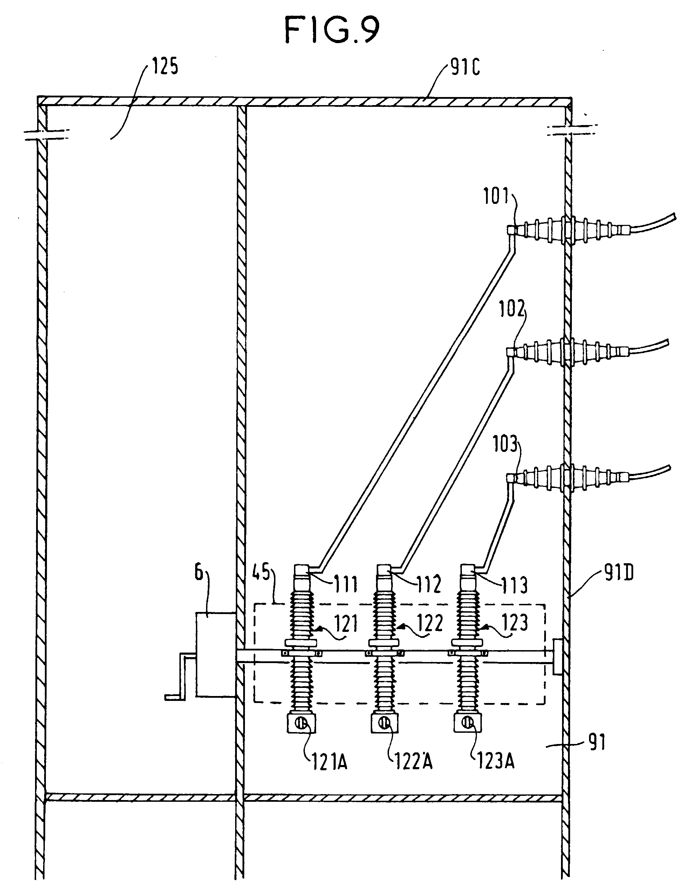

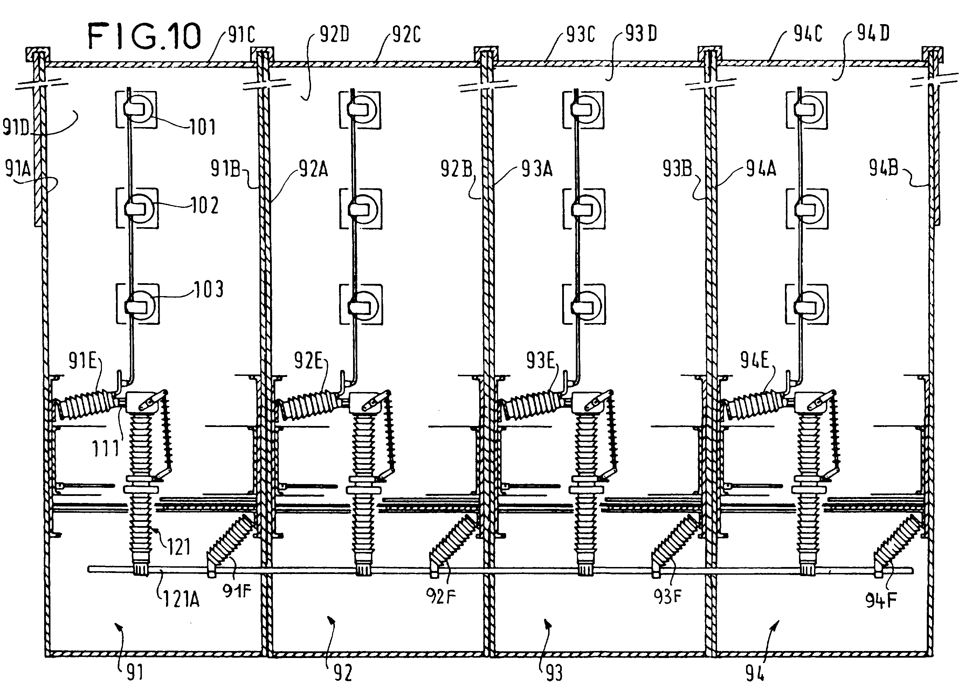

Les figures 9 et 10 illustrent une sous-station comprenant quatre arrivées ou départs, reliés par liaisons aériennes à des arrivées lignes ou des départs transformateurs, et une distribution sur un jeu de barres.

La figure 9 est une vue de face dans laquelle la face avant a été ôtée pour permettre de voir l'intérieur du poste.

Dans cet exemple, la sous-station comprend quatre compartiments 91 à 94 délimités respectivement par des parois 91A, 91B;92A, 92B; 93A, 93B; 94A, 94B. Les compartiments sont placés côte-à-côte et munis de toits 91C, 92C, 93C, 94C et de faces arrière 91D, 92D, 93D et 94D.

Les parois et le toit sont réalisés de préférence en panneaux identiques dans un matériau choisi parmi le béton, le GRC, l'aluminium ou l'acier. Cette réalisation modulaire très rustique est très économique. Elle permet la réalisation de sous-stations électriques jusqu'à 72 kV; le constructeur des disjoncteurs à auto-sectionneurs de l'invention peut lui-même équiper ce type de poste, sans faire appel aux services d'une entreprise extérieure. Cette nouvelle conception de poste peut être à la base d'une politique d'exportation dans laquelle la réalisation des panneaux et du toit peuvent constituer l'apport d'un partenaire local.

Chaque cellule comporte, comme on le voit dans la cellule 91, des traversées isolantes 101, 102, 103 recevant les liaisons aériennes et reliées à des prises 111, 112, 113 coopérant avec les pôles 121, 122, 123 d'un disjoncteur auto-sectionneur selon l'invention installés sur leur profilé 4 disposée dans le tiroir 45 et solidaire du boîtier de commande 6. Les prises 11, 112 et 113 sont maintenus en place par des isolateurs tels que 91E, 92E, 93E et 94E fixés aux parois 91A, 92A, 93A et 94A. Les pôles du disjoncteur sectionneur coopèrent avec un jeu de barres 121A, 122A, 123A qui s'étendent sur toute la largeur du poste ne traversant les parois 92A, 92B, 93A, 93B et 94A. Ce jeu de barres est maintenu en place par des isolateurs tels que 91F, 92F, 93F et 94F fixés aux parois 91B, 92B, 93B et 94B respectivement. Ces isolateurs peuvent être des transformateurs de courant ou des parafoudres.

La profondeur des parois est suffisante pour ménager un couloir d'exploitation abrité 125.

La sous-station qui vient d'être décrite en référence aux figures 9 et 10 comporte toutes les fonctions d'exploitation. Les tiroirs contenant les disjoncteurs auto-sectionneurs sont directement insérés dans les compartiments aisément montés à l'aide de panneaux préfabriqués et sur lesquels les traversées, isolateurs, transformateurs de courant ou parafoudres ont pu être montés en usine.

L'isolement entre compartiments, et entre côté lignes et côté jeu de barres, est assuré, ce qui rend improbable tout défaut entre phases.

Une sous-station du type précité peut être réalisée pour toutes tensions entre 7,2 et 72 kV.

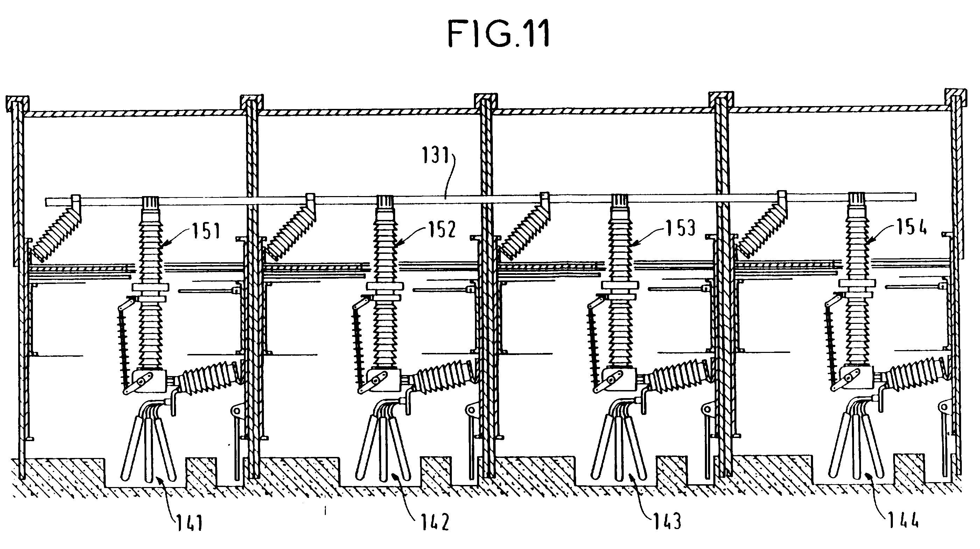

La figure 11 représente une sous-station tout à fait analogue à la précédente, dans laquelle cependant l'arrivée est faite sur un jeu de barres commun 131 et le départ par câbles 141, 142, 143 et 144. Chaque compartiment est équipé d'un disjoncteur auto-sectionneur selon l'invention, 151, 152, 153 et 154.

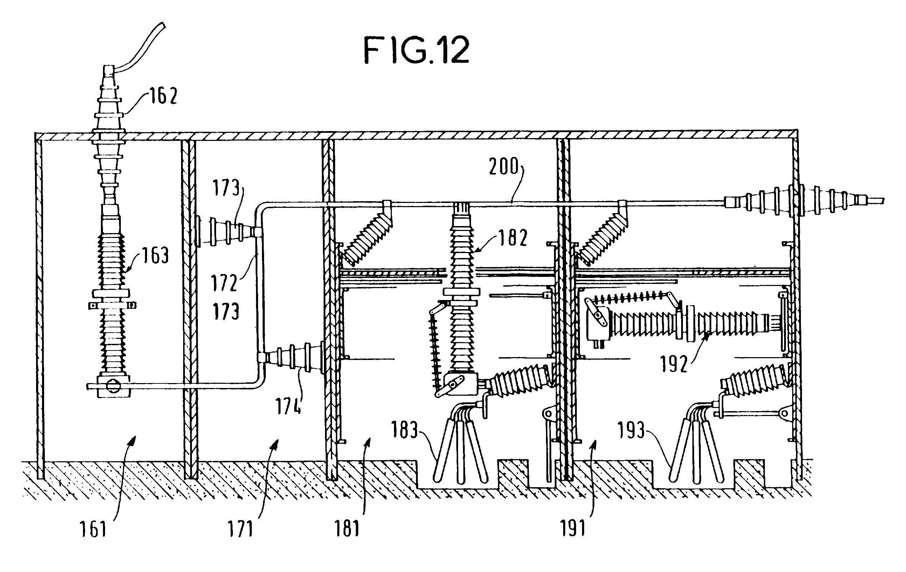

La figure 12 représente une sous-station comprenant un départ aérien et deux départs souterrains par câbles. Le poste comprend un premier module 161 comprenant une traversée 162 au plafond et un disjoncteur auto-sectionneur 163, un second module 171 pour la remontée de barres 172 avec isolateurs supports 173 et 174, un troisième module 181 comportant un disjoncteur auto-sectionneur 182 avec un départ 183 de câbles souterrains et un quatrième module 191 comportant un disjoncteur auto-sectionneur 192 avec un départ 193 de câbles souterrains, les modules 181 et 191 étant alimentés par un jeu de barres commun 200.

La figure 13 est le schéma théorique d'un poste en H comprenant deux lignes d'arrivées L1 et L2, deux départs transformateurs TR1 et TR2, et trois disjoncteurs D1, D2 et D3 respectivement encadrés par des couples de sectionneurs S11, S12; S21, S22; S3, S'3. Les départs transformateurs sont protégés respectivement par des sectionneurs S4 et S5.

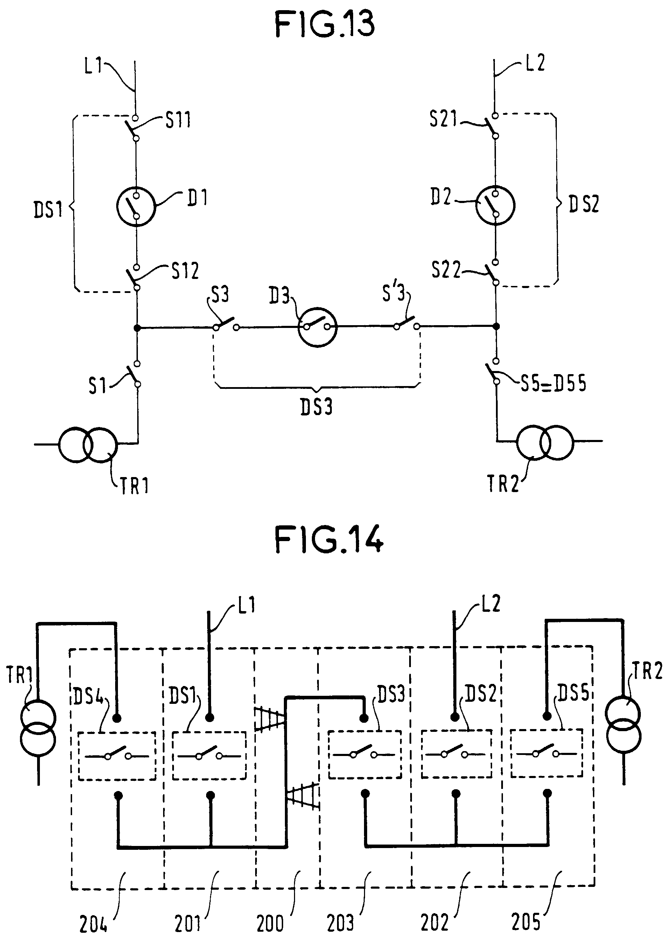

Un tel poste peut, grâce à l'invention, être réalisé de manière très économique au moyen de cinq modules identiques 201 à 205 et d'un module de remontée de jeu de barres 206 (figure 14).

Les modules 201, 202 et 203 contiennent des disjoncteurs auto-sectionneurs DS1, DS2 et DS3 selon l'invention, qui remplacent respectivement les ensembles S11, D1, S12; S21, D2, S22; S3, D3, S'3. Les sectionneurs S4 et S5 sont remplacés par des disjoncteurs auto-sectionneurs DS4 et DS5 selon l'invention, dans lesquels la chambre de coupure est supprimée et remplacée par un conducteur reliant intérieurement les bornes extrêmes de chaque pôle, seule la fonction sectionneur étant ainsi conservée.

Ainsi, le poste en H est réalisé de manière particulièrement économique par cinq cellules standards identiques et une cellule de remontée de jeu de barres ne comportant que quelques isolateurs supports.

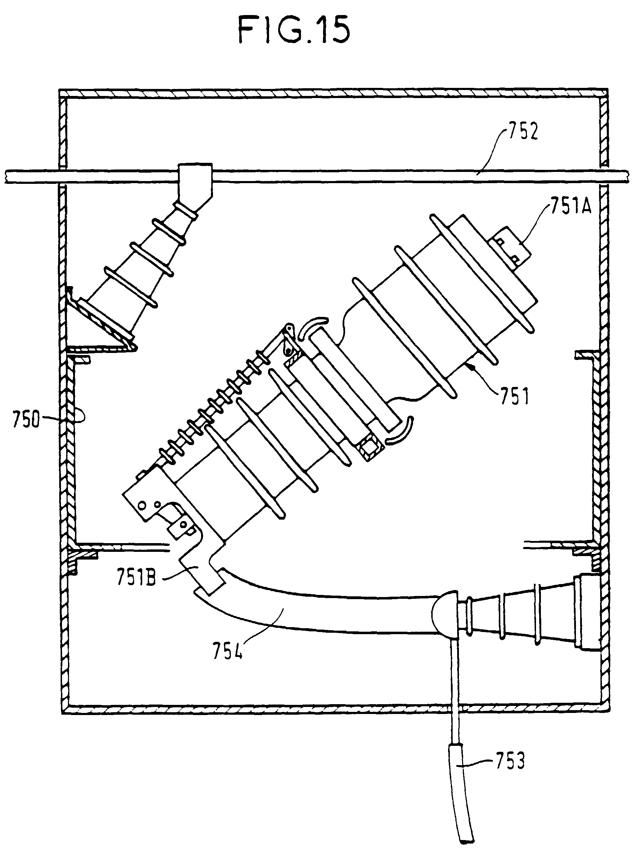

Le disjoncteur auto-sectionneur de l'invention est particulièrement adapté à la réalisation de cellules permettant la mise à la terre du câble. Cette mise à la terre est exigée par les normes de certains pays en particulier au Royaume-Uni, et est connue sous le vocable anglais "Integral earthing". La figure 15 représente une cellule permettant cette mise à la terre. Elle comporte un tiroir extractible 750 enfermant les trois pôles d'un disjoncteur auto-sectionneur selon l'invention; seul le pôle 751 est visible dans la figure puisqu'il s'agit d'une vue en bout. La référence 751A désigne la mâchoire supérieure du pôle, la référence 751B désignant la mâchoire inférieure. La cellule comprend un jeu de barres 752 et un départ de câbles 753. On note que par rapport à la cellule représentée dans les figures 4 et 5, le sectionneur de terre 57 a été supprimé.

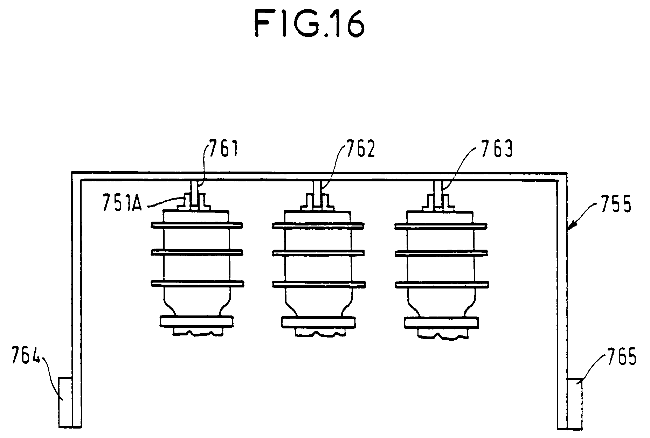

La mise à la terre intégrale s'effectue de la manière suivante:
- le disjoncteur auto-sectionneur est mis en position déclenchée,
- le tiroir est extrait,
- le disjoncteur auto-sectionneur est basculé à 45 degrés par une rotation dans le sens horaire du profilé support des pôles,
- les trois pôles du disjoncteur sont court-circuitées au moyen d'un étrier métallique 755 (figure 16), comprenant trois contacts 761, 762 et 763 venant s'engager dans les mâchoires supérieures 751A des pôles; l'étrier sert également à mettre à la terre les pôles du disjoncteurs puisque les branches de l'étrier viennent en contact avec le tiroir qui est à la terre par le profilé métallique support des pôles. L'étrier comporte également des butées 764 et 765 qui serviront à limiter la course en rotation des pôles dans le sens antihoraire lorsqu'on rebasculera les pôles, et à maintenir ces derniers à une distance suffisante des barres pendant 752,
- le tiroir étant toujours extrait et les pôles inclinés à 45 degrés, on fixe sur chacune des mâchoires inférieures 751B des pôles un prolongateur métallique 754,
on remet le disjoncteur auto-sectionneur en position horizontale et on referme le tiroir,
- on fait pivoter les pôles dans le sens antihoraire jusqu'en butée, ce qui a pour effet de mettre les prolongateurs 754 en contact avec les départs de câbles,
- on ferme le disjoncteur auto-sectionneur, ce qui entraîne la mise à la terre des câbles à travers le disjoncteur.

Si, à ce moment, une tension est présente sur les câbles, les pôles du disjoncteur s'ouvrent en raison du court-circuit établi.

On constate donc qu'une cellule équipée du disjoncteur auto-sectionneur de l'invention permet la réalisation de la mise à la terre intégrale grâce à quelques accessoires simples et parfaitement sûrs.

L'invention s'applique à la réalisation de postes à moyenne ou haute tension (jusqu'à 72 kV) d'un concept nouveau, économiques et fiables.

Si on considère un poste électrique à moyenne tension de l'art antérieur, on observe que ces ouvrages, installés en zone urbaine ou rurale, sont pratiquement toujours installés dans un bâtiment particulier. Ils sont constitués de cellules préfabriquées à moyenne tension dont chacune constitue une entité séparée en ce qui concerne les arrivées et les départs de câbles, les appareillages de manoeuvre et de protection, et les équipements de relayage.

Un alignement de cellules constitue un poste grâce à leur raccordement à un jeu de barres commun à toutes les cellules.

On peut dire qu'il y a redondance entre les cellules et le poste puisqu'on enferme des volumes cellules dans un volume poste.

Les exploitants des réseaux à moyenne tension ont toujours cherché à minimiser les conséquences dans un poste d'un éventuel incident dans une cellule. De nouveaux efforts dans ce sens sont en cours dans le cadre des campagnes européennes pour l'amélioration de la qualité de la distribution de l'énergie aux abonnés:
- efforts pour canaliser les défauts à la terre et éviter les défauts symétriques entre phases toujours plus violents et causes de plus de dégâts.
- efforts pour éviter que l'arc se propage et détruise d'autres cellules que celle dans laquelle s'est produit l'incident.

Malgré cela, il est toujours difficile, en cas de défaut, de canaliser l'arc dans des cellules métalliques d'encombrement réduit et qui par ailleurs sont remplies de matériaux isolants.

Les exploitants de tous les pays déplorent chaque année la destruction par incendie de plusieurs postes à moyenne tension dus en général à des défauts prolongés en raison de la disparition au cours du défaut de la ou des sources auxiliaires d'alimentation des protections.

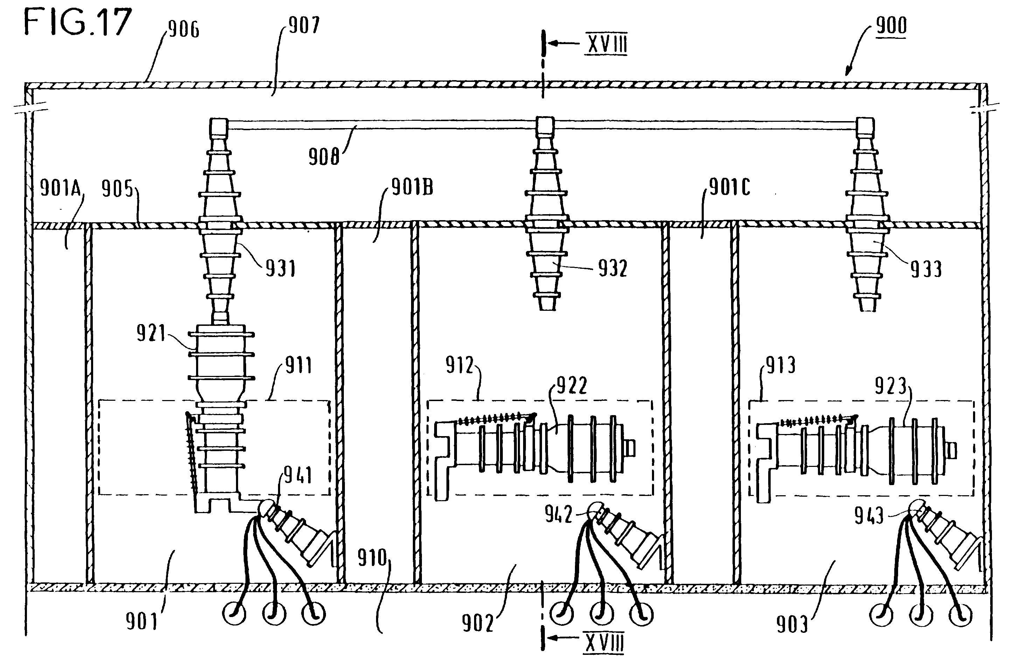

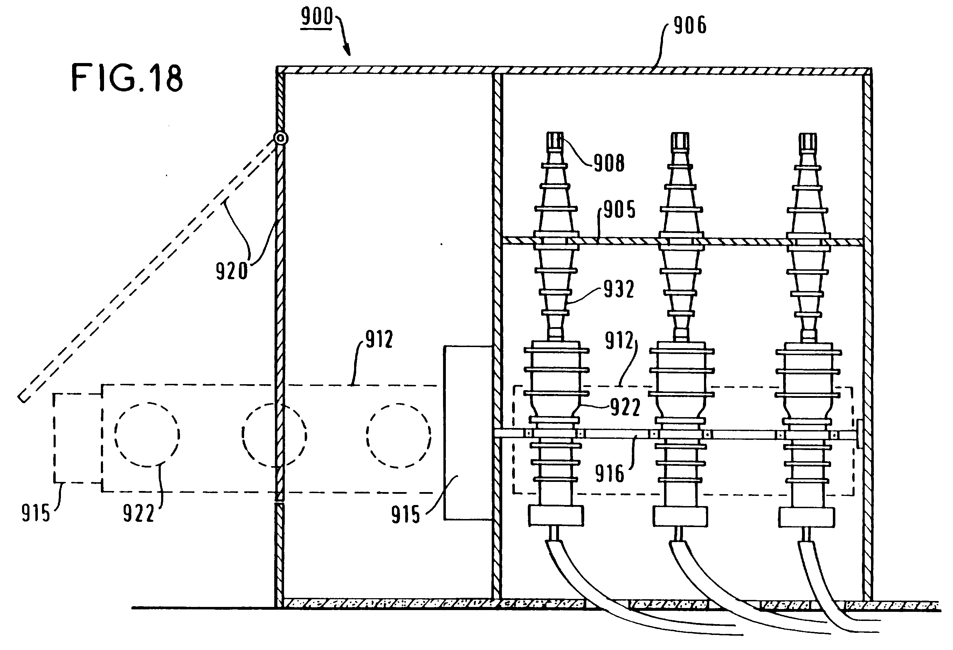

Le disjoncteur auto-sectionneur permet la réalisation de postes à moyenne tension de construction simple et économique comme le montre les figures 17 et 18.

Dans les figures, on distingue une structure 900 de forme sensiblement parallélépipédique réalisée en béton, en GRC ou en matériau de construction équivalent résistant au feu, et comprenant plusieurs alvéoles 901, 902, 903, contenant chacun un disjoncteur auto-sectionneur de l'invention; à chacun des alvéoles est adjoint un compartiment 901A, 901B, 901C contenant des équipements de protection montés de préférence dans des tiroirs coulissants ou placés dans des caissons amovibles non représentés. Les compartiments et les alvéoles sont surmontés d'un plafond 905 définissant avec un toit 906 un compartiment 907 où est placé un jeu de barres commun 908 aux compartiments.

Chaque compartiment reçoit un tiroir 911, 912, 913 muni d'un disjoncteur auto-sectionneur du type décrit précédemment, 921, 922, 923 avec leur profilé support commun 916 et leur coffret de commande 915. Ces disjoncteurs peuvent être connectés au jeu de barres par des traversées isolantes 931, 932, 933 et à des départs 941, 942, 943 de câbles partant dans des caniveaux aménagés dans le socle 910 du poste.

A l'avant du poste (figure 18), est ménagé un couloir de circulation fermé en service normal par un volet 920. En cas d'intervention sur l'un des disjoncteurs auto-sectionneurs, par exemple le disjoncteur auto-sectionneur 922, le volet est soulevé et le tiroir extrait, comme il est représenté en traits interrompus dans la figure 18.

Le poste qui vient d'être décrit en référence aux figures 17 et 18 présente, outre des avantages sur le plan de l'économie de réalisation, des avantages inhérents à l'emploi de disjoncteurs auto-sectionneurs de l'invention. Par ailleurs la conception en compartiments et alvéoles de béton ou matériau analogue assure que les défauts entre phases ont peu de possibilités de se propager ou de détruire les équipements basse tension nécessaires à l'exploitation, la télécommande ou la télésignalisation.

On notera que le tiroir contenant les pôles du disjoncteur auto-sectionneur peut être manoeuvré manuellement ou motorisé. Il est possible de prévoir une console d'appui munie de roulettes pour faciliter l'extraction du tiroir et le supporter en position ouverte.

Bien entendu, les exemples d'application de l'invention sont multiples et ne sauraient être limités aux quelques exemple donnés, l'invention s'appliquant à toutes les réalisations en moyenne tension qui utilisent des disjoncteurs, des sectionneurs et des dispositifs de mesure du courant, sans sortir du cadre de l'invention telle que revendiquée.

## Revendications

1. Disjoncteur auto-sectionneur à hexafluorure de soufre multipolaire de toutes technologies dans lequel chaque pôle (1, 2, 3) comprend une enveloppe isolante (10) remplie d'hexafluorure de soufre et munie de d'un premier (12) et d'un second (14) flasques métalliques d'extrémité, l'enveloppe comprenant à son intérieur un jeu de contacts fixes (21, 24) reliés à une première (13) mâchoire de contact extérieure à l'enveloppe et reliée mécaniquement et électriquement au premier flasque (12), un jeu de contacts mobiles (25, 28) reliés électriquement à une seconde mâchoire (16) de contact extérieure à l'enveloppe et solidaire du second flasque (14), et reliés mécaniquement à un mécanisme de manoeuvre (38, 39, 40, 5, 6), caractérisé en ce que, pour chaque pôle, les contacts mobiles (25, 28) sont électriquement reliés par contacts glissants à un tube métallique fixe (31) s'étendant à l'intérieur de l'enveloppe, coaxialement à celle-ci, et débouchant dans un carter étanche (15), ladite seconde mâchoire (16) étant solidaire du carter (15), lesdits contacts mobiles (25, 28) étant reliés à une tringle de manoeuvre (34) disposée à l'intérieur dudit tube (31) et articulée, dans le carter (15), à une bielle (35) elle-même articulée par une première extrémité à un axe fixe (36) traversant le carter (15) de manière étanche et par une seconde extrémité à une première extrémité d'une tige isolante (39) dont l'autre extrémité est articulée par une bielle (40) à un arbre de commande (5) commun aux divers pôle du disjoncteur auto-sectionneur, l'arbre de commande (5) étant monté parallèlement à un profilé métallique(4) au potentiel de la terre auquel sont fixés les pôles du disjoncteur auto-sectionneur, la fixation étant faite sensiblement au milieu de chaque enveloppe (10), les diverses enveloppes (10) étant disposées parallèlement entre elles et perpendiculairement audit profilé (4), les extrémités dudit profilé (4) étant montées pivotantes sur deux faces opposées d'un tiroir (45) sensiblement parallélépipédique, le profilé (4) étant monté, dans le tiroir (45), mobile en rotation autour de sa propre direction, le tiroir (45) ayant des dimensions suffisantes pour contenir l'ensemble des pôles, la fonction sectionnement du disjoncteur auto-sectionneur étant assurée par une rotation de 90 degrés du profilé (4) par rapport au tiroir (45) l'arbre de commande (5) étant associé à un boîtier de commande (6) solidaire dudit profilé (4) et contenant un mécanisme de stockage d'énergie de manoeuvre et des moyens de manoeuvre en rotation ou en translation dudit arbre de commande (5) pour assurer simultanément dans chaque pôle la fonction disjoncteur, le disjoncteur étant placé dans un caisson métallique (43) dans lequel peut coulisser le tiroir (45), le caisson (43) contenant des éléments isolants (49, 51) de maintien des jeux de barres (48) et des départs de câbles (55) avec lesquels coopère le disjoncteur auto-sectionneur.

2. Disjoncteur auto-sectionneur selon la revendication 1, caractérisé en ce que l'enveloppe (10) est entourée d'un tore magnétique bobiné (17) constituant un transformateur de courant, le tore (17) étant disposé au-dessus dudit profilé metallique (4).

3. Disjoncteur auto-sectionneur selon la revendication 2, caractérisé en ce que les éléments isolants (49, 51) sont choisis parmi les isolateurs, les transformateurs de courant et les parafoudres.

4. Disjoncteur auto-sectionneur selon la revendication 3, caractérisé en ce que le caisson (43) comprend un volet fixe (61) coopérant avec un obturateur pivotant (62) fixé au tiroir (45) pour séparer le compartiment du jeu de barres (48) du compartiment des câbles (55), lorsque le disjoncteur auto-sectionneur est en service.

5. Disjoncteur auto-sectionneur selon l'une des revendications 3 et 4, caractérisé en ce que le caisson (43) porte un volet coulissant (61B) venant empêcher, avec le volet fixe (61) l'accès du compartiment barres (48) lorsque le tiroir (45) est en position ouverte.

6. Disjoncteur auto-sectionneur selon la revendication 5, caractérisé en ce que le mouvement dudit volet coulissant (61B) est assuré par un disque (61C) fixé au caisson (43) et entraîné en rotation par ledit profilé (4), le disque (61C) entraînant en rotation par un embiellage (61F, 61G) un arbre (61E) auquel est fixé au moins une bielle (61H) coopérant avec une manivelle (61I) articulée audit volet coulissant (61B).

7. Disjoncteur selon l'une des revendications 1 à 3, caractérisé en ce que le caisson (43) comporte deux volets parrallèles (61L, 61R) comprenant respectivement chacun deux parties pouvant s'écarter l'une de l'autre et rappelées par ressorts, l'un (61L) des volets assurant la séparation entre le compartiment barres et le compartiment câbles de la cellule lorsque le disjocteur est déclenché et sectionné, l'autre (61R) portant des ouvertures assurant la même séparation en enserrant les pôles lorsque le disjoncteur est en service.

8. Disjoncteur auto-sectionneur selon l'une des revendications 3 à 7, caractérisé en ce que le caisson (43) porte un sectionneur (57) servant à mettre à la terre les câbles départ protégés par le disjoncteur auto-sectionneur.

9. Disjoncteur auto-sectionneur selon l'une des revendications 3 à 8, disposé entre un jeu de barres (752) et un départ de câbles (753), caractérisé en ce que lesdits câbles (753) sont mis à la terre de manière intégrale à travers le disjoncteur au moyen d'un étrier (755) court-circuitant les mâchoires supérieures (751A) du disjoncteur et les mettant à la terre par contact avec le tiroir (750), et au moyen de conducteurs prolongateurs (754) assurant le contact entre les mâchoires inférieures du disjoncteur auto-sectionneur et les départs câbles.

10. Disjoncteur auto-sectionneur selon la revendication 9, caractérisé en ce que l'étrier (755) comprend des butées mécaniques et électriques (764) de limitation de la course en rotation du tiroir (750).

11. Sous-station préfabriquée caractérisé en ce qu'elle comprend au moins un disjoncteur auto-sectionneur selon l'une des revendications 1 à 10.

12. Sous-station selon la revendication 11, caractérisée en ce qu'elle est composée de modules préfabriqués juxtaposés (91, 92, 93, 94) comportant chacun un compartiment pour les jeux de barres (121A, 122A, 123A), des glissières pour recevoir un tiroir (45) contenant les pôles (121, 122, 123) du disjoncteur auto-sectionneur et un compartiment contenant un jeu de câbles (141, 142, 143, 144) ou des arrivées aériennes.

13. Sous-station en H caractérisé en ce qu'elle comprend cinq modules (201, 202, 203, 204, 205) contenant chacun un disjoncteur auto-sectionneur (DS1,DS2, DS3, DS4, DS5) selon l'une des revendications 1 à 10.

14. Poste à moyenne tension, caractérisé en ce qu'elle comprend une structure sensiblement parallélépipédique en un matériau de construction résistant au feu, ladite structure comprenant une pluralité de compartiments (901, 902, 903) contenant chacun un disjoncteur auto-sectionneur selon l'une des revendications 1 à 10, chaque compartiment étant associé à un alvéole (901A, 901B, 901C) contenant des appareillages basse tension pour le fonctionnement des disjoncteurs auto-sectionneurs ainsi que pour la télécommande et la télésignalisation, les compartiments et alvéoles étant surmontés d'un plafond (905) définissant avec un toit (906) un compartiment où est placé un jeu de barres (908) commun aux disjoncteurs auto-sectionneurs avec lesquels les barres coopèrent grâce à des traversées isolantes (931, 932, 933), le poste comportant un couloir (917) en face avant, les câbles de sortie (951, 952, 953) passant dans des caniveaux du socle (910) du poste.

## Patentansprüche

1. Mehrpoliger selbsttrennender Leistungsschalter mit Schwefelhexafluorid beliebiger Technologie, bei dem jeder Pol (1, 2, 3) eine isolierende, mit Schwefelhexafluorid gefüllte Hülle (10) sowie einen ersten (12) und einen zweiten Metallflansch (14) an den Enden besitzt sowie innen einen Satz von festen Kontakten (21, 24), die mit einer ersten außerhalb der Hülle liegenden und mechanisch und elektrisch mit dem ersten Flansch (12) verbundenen Kontaktklemme (13) verbunden sind, sowie einen Satz von beweglichen Kontakten (25, 28), die elektrisch an eine zweite, am zweiten Flansch (14) befestigte Kontaktklemme (16) außerhalb der Hülle und mechanisch an einem Betätigungsmechanismus (38, 39, 40, 5, 6) angeschlossen sind, dadurch gekennzeichnet, daß für jeden Pol die beweglichen Kontakte (25, 28) elektrisch über Gleitkontakte an ein festes Metallrohr (31) angeschlossen sind, das sich innerhalb der Hülle koaxial zu dieser erstreckt und in einem dichten Gehäuse (15) endet, daß die zweite Klemme (16) mit dem Gehäuse (15) fest verbunden ist, daß die beweglichen Kontakte (25, 28) mit einer Betätigungsstange (34) verbunden sind, die sich innerhalb des Rohrs (31) befindet und im Gehäuse (15) an einen Hebel (35) angelenkt ist, der seinerseits über ein erstes Ende mit einer festen Achse (36) gelenkig verbunden ist, die das Gehäuse (15) dicht durchquert, während das zweite Ende des Hebels (35) mit einem isolierenden Stab (39) verbunden ist, dessen anderes Ende über eine Pleuelstange (40) an einer den verschiedenen Polen des selbsttrennenden Leistungsschalters gemeinsamen Steuerwelle (5) angelenkt ist, daß die Steuerwelle (5) parallel zu einem auf Erdpotential liegenden Metallprofil (4) montiert ist, auf dem die Pole des Leistungsschalters befestigt sind, daß die Befestigung im wesentlichen in der Mitte jeder Hülle (10) erfolgt, daß die verschiedenen Hüllen (10) parallel zueinander und senkrecht zum Metallprofil (4) verlaufen, daß die Enden des Metallprofils (4) drehbar in zwei einander gegenüberliegenden Seiten einer im wesentlichen parallelepipedischen Schublade (45) montiert sind, daß das Metallprofil (4) in der Schublade (45) drehbar um seine eigene Achse montiert ist und die Schublade (45) ausreichend groß bemessen ist, um die Gesamtheit der Pole aufzunehmen, daß die Trennfunktion des Leistungsschalters durch eine Drehung des Metallprofils (4) bezüglich der Schublade (45) um 90° bewirkt wird, daß die Steuerwelle (5) einem Steuerkasten (6) zugeordnet ist, der mit dem Metallprofil (4) fest verbunden ist und einen Mechanismus zur Speicherung von Betätigungsenergie sowie Betätigungsmittel für die Dreh- oder Translationsbewegung der Steuerwelle (5) enthält, um die Pole des Leistungsschalters gemeinsam zu betätigen, daß der Leistungsschalter sich in einem Metallkasten (43) befindet, in dem die Schublade (45) gleiten kann, und daß der Kasten (43) Isolierelemente (49, 51) aufweist, um die Stromschienensätze (48) und die Kabelabgänge (55) zu stützen, mit denen der Leistungsschalter zusammenwirkt.

2. Leistungsschalter nach Anspruch 1, dadurch gekennzeichnet, daß die Hülle (10) von einem bewickelten Magnetring (17) umgeben ist, der einen Stromtransformator bildet und oberhalb des Metallprofils (4) liegt.

3. Leistungsschalter nach Anspruch 2, dadurch gekennzeichnet, daß die isolierenden Elemente (49, 51) unter den Isolatoren, Stromtransformatoren und Überspannungsableitern ausgewählt werden.

4. Leistungsschalter nach Anspruch 3, dadurch gekennzeichnet, daß der Kasten (43) eine feste Trennwand (61) besitzt, die mit einem schwenkbaren Verschlußorgan (62) zusammenwirkt, das an der Schublade (45) befestigt ist, um das Stromschienenabteil (48) gegenüber dem Kabelabteil (55) zu verschließen, wenn der Leistungsschalter in Betrieb ist.

5. Leistungsschalter nach einem der Ansprüche 3 und 4, dadurch gekennzeichnet, daß der Kasten (43) eine gleitende Trennwand (61B) enthält, die zusammen mit der ortsfesten Trennwand (61) den Zugang zum Stromschienenabteil (48) versperrt, wenn die Schublade (45) offen ist.

6. Leistungsschalter nach Anspruch 5, dadurch gekennzeichnet, daß die Bewegung der gleitenden Trennwand (61B) durch eine Scheibe (61C) bewirkt wird, die am Kasten (43) befestigt ist und durch das Metallprofil (4) in Drehung versetzt wird, wobei die Scheibe (61C) über ein Gestänge (61F, 61G) eine Welle (61E) antreibt, an der mindestens eine mit einer an der gleitenden Trennwand (61B) angelenkten Kurbel (61I) zusammenwirkende Stange (61H) befestigt ist.

7. Leistungsschalter nach einem der Ansprüche 1 bis 3, dadurch gekennzeichnet, daß der Kasten (43) zwei parallele Trennwände (61L, 61R) aufweist, die je zwei Bereiche besitzen, welche sich voneinander entfernen können und durch Federn zueinandergezogen werden, wobei eine dieser Trennwände (61L) die Trennung zwischen dem Stromschienenabteil und dem Kabelabteil der Zelle bewirkt, wenn der Leistungsschalter ausgeschaltet und abgetrennt ist, während der andere (61R) Öffnungen aufweist und die gleiche Trennung bewirken, indem die Pole umschlossen werden, wenn der Leistungsschalter im Betrieb ist.

8. Leistungsschalter nach einem der Ansprüche 3 bis 7, dadurch gekennzeichnet, daß der Kasten (43) einen Erdschalter (57) besitzt, um die durch den Leistungsschalter geschützten Ausgangskabel zu erden.

9. Leistungsschalter nach einem der Ansprüche 3 bis 8, der zwischen einem Stromschienensatz (752) und einem Abgang für Kabel (753) liegt, dadurch gekennzeichnet, daß die Kabel (753) integral über den Leistungsschalter mit Hilfe eines Bügels (755), der die oberen Klemmen (751A) des Leistungsschalters kurzschließt und durch Kontakt mit der Schublade (750) erdet, und mit Hilfe von Verlängerungsleitern (754) geerdet werden, die den Kontakt zwischen den unteren Klemmen des Leistungsschalters und den Kabelabgängen gewährleisten.

10. Leistungsschalter nach Anspruch 9, dadurch gekennzeichnet, daß der Bügel (755) mechanische und elektrische Anschläge (764) zur Begrenzung der Drehbewegung in der Schublade (750) besitzt.

11. Vorgefertigte Unterstation, dadurch gekennzeichnet, daß sie mindestens einen Leistungsschalter gemäß einem der Ansprüche 1 bis 10 enthält.

12. Unterstation nach Anspruch 11, dadurch gekennzeichnet, daß sie aus vorgefertigten und nebeneinanderliegenden Moduln (91, 92, 93, 94) besteht, die je ein Abteil für den Stromschienensatz (121A, 122A, 123A), Gleitschienen zur Aufnahme einer Schublade (45) mit den Polen (121, 122, 123) des Leistungsschalters und ein Abteil mit einem Satz von Kabeln 141, 142, 143, 144 oder Freileitungszugängen enthalten.

13. H-förmige Unterstation, dadurch gekennzeichnet, daß sie fünf Moduln (201, 202, 203, 204, 205) mit je einem Leistungsschalter (DS1, DS2, DS3, DS4, DS5) gemäß einem der Ansprüche 1 bis 10 enthält.

14. Mittelspannungsstation, dadurch gekennzeichnet, daß sie eine im wesentlichen parallelepipedische Struktur aus einem feuerfesten Baumaterial enthält, mit einer Mehrzahl von Abteilen (901, 902, 903), die je einen Leistungsschalter gemäß einem der Ansprüche 1 bis 10 enthalten und je ein Fach (901A, 901B, 901C) mit Niederspannungsgeräten für den Betrieb der Leistungsschalter sowie für die Fernsteuerung und Fernmeldung besitzen, wobei die Abteile und Fächer von einem Fehlboden (905) überragt werden, der mit einem Dach (906) ein Abteil für einen gemeinsamen Stromschienensatz (908) der Leistungsschalter definiert, mit denen die Stromschienen durch isolierende Traversen (931, 932, 933) zusammenwirken, und daß die Station einen Gang (917) an der Vorderseite besitzt und die Ausgangskabel (951, 952, 953) durch Schächte im Sockel (910) der Station verlaufen.

## Claims

1. A multipole sulfur hexafluoride isolating circuit-breaker of any technology in which each pole (1, 2, 3) comprises an insulating case (10) filled with sulfur hexafluoride and provided with first and second metal endplates (12, 14), the case containing a set of fixed contacts (21, 24) connected to a first jaw terminal (13) outside the case and mechanically and electrically connected to the first endplate (12), a set of moving contacts (25, 28) electrically connected to a second jaw terminal (16) outside the case, secured to the second endplate (14), and mechanically connected to a drive mechanism (38, 39, 40, 5, 6), the circuit-breaker being characterized in that, for each pole, the moving contacts (25, 28) are electrically connected via sliding contacts to a fixed metal tube (31) extending inside the case and coaxial therewith, the tube opening out into a sealed casing (15), said second jaw terminal (16) being secured to the casing (15), said moving contacts (25, 28) being connected to a drive rod (34) disposed inside said tube (31) and hinged inside the casing (15) to a first end of a crank (35) pivoting on a pin (36) passing through the casing (15) in sealed manner and having a second end hinged to a first end of an insulating rod (39) whose other end is hinged via a crank (40) to a control shaft (5) which is common to the various poles of the isolating circuit-breaker, the control shaft (5) being disposed parallel to a metal bar (4) to ground potential having the poles of the isolating circuit-breaker fixed thereto, the poles being fixed substantially in the middles of their respective cases (10), the various cases (10) being disposed in parallel perpendicularly to said bar (4), the ends of said bar (4) being pivotally mounted to two opposite faces of a substantially rectangular drawer (45), the bar (4) being mounted in the drawer (45) to rotate about its own axis, the drawer being large enough to contain the set of poles, the section switching function of the isolating circuit-breaker being provided by rotating the bar (4) through 90° relative to the drawer (45), the control shaft (5) being associated with a control box (6) secured to said bar (4) and containing a mechanism for storing drive energy and means for driving said control shaft (5) in rotation or in translation in order to cause all of the poles to perform their circuit-breaker function simultaneously, the circuit-breaker being placed in a metal chest (43) in which the drawer (45) is capable of sliding, the chest (43) containing insulating elements (49, 51) for holding the sets of busbars (48) and the cable outlets (55) with which the isolating circuit-breaker co-operates.

2. An isolating circuit-breaker according to claim 1, characterized in that the case (10) is surrounded by a wound magnetic torus (17) constituting a current transformer, the torus (17) being disposed above said metal bar (4).

3. An isolating circuit-breaker according to claim 2, characterized in that the insulating elements (49, 51) are selected from: insulators, current transformers, and lightning arrestors.

4. An insulating circuit-breaker according to claim 3, characterized in that the chest (43) includes a fixed flap (61) co-operating with a pivoting shutter (62) fixed to the drawer (45) to separate the busbar compartment (48) from the cable compartment (55) when the isolating circuit-breaker is in operation.

5. An isolating circuit-breaker according to claim 3 or 4, characterized in that the chest (43) carries a sliding flap (61B) that co-operates with the fixed flap (61) to prevent access to the busbar compartment (48) when the drawer (45) is in its open position.

6. An isolating circuit-breaker according to claim 5, characterized in that said moving flap (61B) is moved by a disk (61C) fixed to the chest (43) and rotated by said bar (4), the disk (61C) rotating a shaft (61E) by means of a linkage (61F, 61G), said shaft being fixed to at least one connecting rod (61H) co-operating with a crank (61I) hinged to said sliding flap (61B).

7. A circuit-breaker according to any one of claims 1 to 3, characterized in that the chest (43) includes two parallel flaps (61L, 61R) each respectively comprising two portions capable of moving apart from each other and urged towards each other by springs, one of the flaps (61L) separating the busbar compartment from the cable compartment of the bay when the circuit-breaker is disengaged and in its isolating position, while the other flap (61R) has openings that provide the same separation while surrounding the poles when the circuit-breaker is in operation.

8. An isolating circuit-breaker according to any one of claims 3 to 7, characterized in that the chest (43) carries a section switch (57) used for grounding the outlet cables that are protected by the isolating circuit-breaker.

9. An isolating circuit-breaker according to any one of claims 3 to 8, disposed between a set of busbars (752) and a cable outlet (753), the circuit-breaker being characterized in that said cables (753) can be grounded integrally via the circuit-breaker by means of a bracket (755) short circuiting the top terminals (751A) of the circuit-breaker and grounding them by putting them into contact with the drawer (750), and by means of extender conductors (754) providing contact between the bottom terminals of the isolating circuit-breaker and the cable outlets.

10. An isolating circuit-breaker according to claim 9, characterized in that the bracket (755) includes electrical and mechanical abutments (764) for limiting the rotary stroke in the drawer (750).

11. A prefabricated substation characterized in that it includes at least one isolating circuit-breaker according to any one of claims 1 to 10.

12. A substation according to claim 10, characterized in that it is made up of juxtaposed prefabricated modules (91, 92, 93, 94) each including a compartment for the sets of busbars (121A, 122A, 123A), slideways for receiving a drawer (45) containing the poles (121, 122, 123) of an isolating circuit-breaker, and a compartment containing a set of cables (141, 142, 143, 144) or of overhead inlets.

13. An H-configuration substation characterized in that it comprises five modules (201, 202, 203, 204, 205) each containing an isolating circuit-breaker (DS1, DS2, DS3, DS4, DS5) according to any one of claims 1 to 10.

14. A medium-tension station characterized in that it comprises a substantially rectangular structure made of fire-resistant building material, said structure having a plurality of compartments (901, 902, 903) each containing an isolating circuit-breaker according to any one of claims 1 to 10, each compartment being associated with a cell (901A, 901B, 901C) containing low tension apparatus for operating the isolating circuit-breakers and for remote control and remote signalling purposes, the compartments and the cells having a ceiling (905) disposed thereover and co-operating with a roof (906) to define a compartment containing a set of busbars (908) common to the isolating circuit-breakers with which the busbars co-operate via insulating feedthroughs (931, 932, 933), the station including a corridor (917) at its front face, the outlet cables (951, 952, 953) passing through cableways in the base (910) of the station.
